# EUROPEAN PATENT APPLICATION

(11) **EP 0 924 495 A2**
(43) Date of publication of application: **23.06.1999**
(21) Application number: 98124279.5
(22) Date of filing: 18.12.1998
(51) Int. Cl.: G01F 1/69

(54) **Air flow measurement apparatus**

(30) Priority: 19.12.1997 JP 35129297
(71) Applicant: Hitachi, Ltd., Chiyoda-ku, Tokyo 101-8010 (JP)
(72) Inventor: Ohta, Kenji, Hitachinaka-shi, Ibaraki 312-0063 (JP); Kanka, Atsushi, Hitachi-shi, Ibaraki 316-0024 (JP)
(74) Representative: Beetz & Partner Patentanwälte

(57) **Abstract**

In a heating resistor type air flow measurement apparatus, a flow correction data is read out from a primary memory and stored in a secondary memory, and then an air flow signal is calibrated by the flow correction data stored in the secondary memory, when starting the apparatus up.

The apparatus has a diagnosis unit (33) for determining whether or not the flow correction data stored in the primary memory is correct, wherein the determination processing of the flow correction data by the diagnosis unit (33) is performed at during any time at least including the starting-up point of the apparatus.

There is no fear that the engine control based on the abnormal flow correction data continues.

## Description

### BACKGROUND OF THE INVENTION

The present invention relates to an air flow meter comprising a heating resistor provided in a passage of air of which flow is measured, and a constant temperature control circuit for maintaining the temperature of the heating resistor to a predetermined value by controlling a current supplied to the heating resistor, and particularly to a heating resistor type air flow measurement apparatus suitable for use of the measurement of the intake air flow in an engine for automobiles.

In recent years, a method of controlling the fuel supplying amount as a function of intake air flow is generally used in an engine (internal combustion engine) for automobiles. In such a control method, an air flow meter is used widely. A heating resistor type air flow measurement apparatus is one of such an air flow meter, and today, it is in the mainstream.

While an output signal of the heating resistor type air flow measurement apparatus is supplied, for example, to an ECU (engine control unit) of an automobile, for exmple, to control the amount of the fuel supplied to the engine, it is necessary to perform the predetermined adjustment of the air flow signal or the calibration.

The calibration means scale matching of instruments, where it means the task for adjusting so that the zero point and the spun (sensitivity) may fall within the predetermined range of specifications.

In the prior art, the characteristics of flow-detection of each of the heating resistor type air flow measurement apparatus is checked and adjusted to fall within the range of specifications before product-shipment.

Today, a resistance trimming method of adjusting a value of the resistance of a resistor is used widely as such an adjusting method. By using the method, the zero point and the spun is adjusted so that the measurement output may fall within the range of specifications.

While, another prior art, an alternative to the resistance trimming method is described in the U.S.P. 4, 669, 052. It is described as "an electronic trimming" or a multi-points correction method which uses digital data.

In the prior art or the multi-points correction method, the correction is made by using the digital data, instead of the resistance value of a resistor. Concretely, a map in which the predetermined data is stored is retrieved, an air flow is corrected by obtaining an air flow value and an flow error, and thus a signal indicative of the correct flow is output.

The characteristics of the flow correction data QaMap (q,a,b) used is checked every apparatus after product-completion, in which the data required to correct the error is calculated and maintained. The correction processing by the flow correction data QaMap (q,a,b) corresponds to the adjustment processing in the resistance trimming. The trimmed and calibrated flow value is obtained as an after-correction flow value QaRef.

In the prior art, the flow correction data QaMap (q,a,b) for trimming is stored in the primary memory means, for example, before product-shipment. The flow correction data QaMap (q,a,b) is read from the primary memory means when the operation of the apparatus is started up, for example, when turning the power switch on. The flow correction data QaMaP(q,a,b) read is stored in the predetermined memory set on a program area or the secondary memory means to be used as a Q map.

As the primary memory means, for example, EEPROM (Electrically Erasable / Programmable Read Only Memory) is used, which is a kind of nonvolatile memory possible to read/write data at any time.

In the above-mentioned prior art, the reliability of the flow correction data stored in the secondary memory means is not taken into consideration. There is, therefore, a problem that an abnormal measurement value of flow is output as it is even when the flow correction data becomes abnormal.

If the secondary memory is set on the program area, the probability that the table data (Q map) stored in the secondary memory means to correct the flow becomes abnormal is low. However, there is a possibility that the data set before product-shipment changes, because the original flow correction data is stored in a memory possible to read/write after product-installing, such as the EEPROM or the primary memory means.

Therefore, the write-protect of data is provided except the adjusting step of product. However, because in the above-mentioned prior art the data is read from the EEPROM, for example, when turning the power on, there is fear that the data is written erroneously. As a result, the flow correction data actually used in the correction process may become abnormal.

In the case that the data is read erroneously, the data for use in the correction of the flow error becomes abnormal, and thus suitable correction can not be made. AS a result, the output value of a sensor (data after correction) does not fall within the range determined by the specifications, and for example, the control of an engine goes to an abnormal state.

### SUMMARY OF THE INVENTION

An object of the present invention is to provide a heating resistor type air flow measurement apparatus using an electronically trimming method in which the occurrence of the flow error caused by the abnormality of the flow correction data can be prevented in advance and a suitable flow value by the error-correction is output at any time.

According to one aspect of the present invention, in a heating resistor type air flow measurement apparatus, a flow correction data is read out from a predetermined primary memory means and stored in a secondary memory means, and then an air flow signal is calibrated by the flow correction data stored in the secondary memory means, when starting the apparatus up. The apparatus comprises a diagnosis means for determining whether or not the flow correction data stored in the primary memory means is correct, wherein the determination processing of the flow correction data by the diagnosis means is performed at during any time at least including the starting-up point of the apparatus.

Because according to the diagnosing method of the present invention, it is possible to determine whether or not the flow correction data actually used for the correction is abnormal, there is no fear that the engine control based on the abnormal flow correction data continues.

### BRIEF DESCRIPTION OF THE DRAWINGS

In the drawings, forming a part hereof, in which like reference characters denote like parts in the various views:
Fig.1 is a block diagram showing the processing in an embodiment of the present invention
Fig. 2 is an illustration of the flow conversion table in an embodiment of the present invention.
Fig.3 is an illustration of the flow correction data table in an embodiment of the present invention.
Fig.4 is an illustration of the retrieval from a table for data correction in an embodiment of the present invention.
Fig.5 is an illustration of the data interpolation in an embodiment of the present invention.
Fig.6 is a view showing the configuration of the general heating resistor type air flow measurement apparatus.
Fig. 7 is a circuit diagram showing the drive circuit of the general heating resistor type air flow measurement apparatus.
Fig.8 is a block diagram showing the processing in one example of the conventional heating resistor type air flow measurement apparatus in which an electrically trimming method is performed.

### DESCRIPTION OF THE PREFERRED EMBODIMENTS

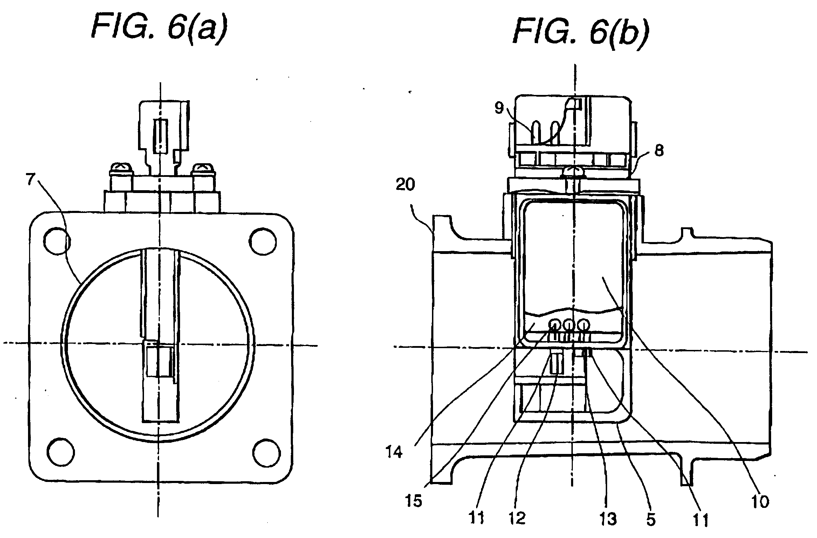

Before the description of the present application, the prior art will be concretely explained by referring to Figs. 6 to 8.

Fig.6 shows one example of a heating resistor type air flow meter for automobiles. In Fig.6, (a) is a view seen from the front, and (b) is a sectional view seen from the side. In these figures, numeral reference 5 designates a member forming an auxiliary air passage, 7 a body of a flow measurement part, 8 a housing member for installing the body of the flow measurement part, 9 a connector portion for circuit connection, 10 a cover member, 11 a support member made of a conductive wire, 12 a heating resistor (RH), 13 a temperature-sensitive resistor (RC), 14 a circuit board, 15 a connection portion of the circuit board, and 20 a cylindrical member forming a portion of an air intake passage of an engine, inserted on the way of the air intake passage.

Where, the member 5 forming an auxiliary air passage, and the housing member 8 for installing the body of the flow measurement part, the connector portion 9, the heating resistor (RH) 12, the temperature-sensitive resistor (RC) 13 and the circuit board 14 are combined as an integrated module, thereby forming the body 7 of the flow measurement part.

An opening of a predetermined shape is provided in the side wall of the cylindrical member 20. The body 7 of the flow measurement part is inserted inside through the opening. Further, the auxiliary air passage formed by the member 5 is positioned inside the cylindrical member 20, by screwing the housing member 8 to the cylindrical member 20.

The heating resistor 12 and the temperature-sensitive resistor 13 each is made of conductive material of which the electric resistance has the temperature-dependence, and held in the auxiliary air passage formed by the member 5. As shown in the figure, the heating resistor 12 is arranged almost perpendicularly to the airflow passing through the auxiliary air passage, thereby exposing it to the air flow. On the other hand, the temperature-sensitive resistor 13 is arranged almost in parallel with the air flow.

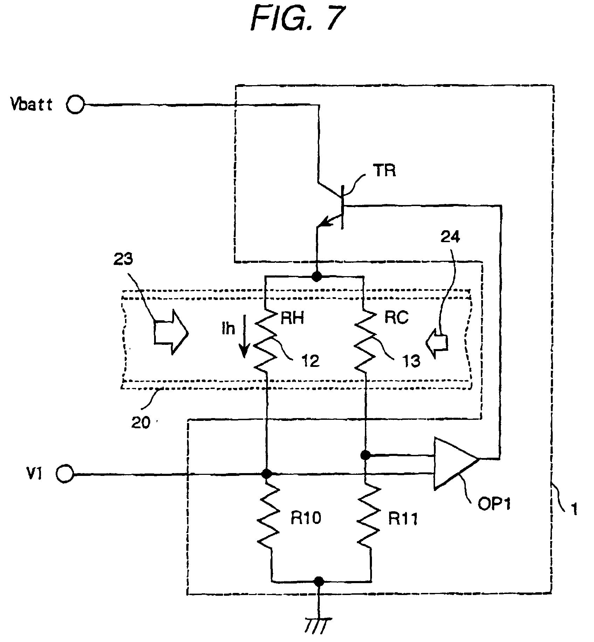

Fig.7 shows the drive circuit 1 mounted on the circuit board 14. In broad outline, the drive circuit 1 comprises a bridge circuit and a feedback circuit.

The bridge circuit comprises the heating resistor 12 and a fixed resistor R10, and the temperature-sensitive resistor 13 and a fixed resistor R11. The feedback circuit comprises an operational amplifier OP1 and a transistor TR. The heating resistor is heated by a heating current Ih controlled by the bridge circuit and the feedback circuit to maintain the difference between the temperatures of the heating resistor 12 and the temperature-sensitive resistor 13.

Under such a condition, if the air is flowed in a direction shown by an arrow 23, the amount of heat carried off from the heating resistor 12 increases. The heat amount carried off at this time is a function of the speed of air flow, which increases according to the flow speed. On the other hand, the temperature of the temperature-sensitive resistor 13 mainly depends on that of the air, not almost on the flow speed.

Therefore, if the air flow is occurred, the resistance value of the heating resistor 12 and the resistance value of the temperature-sensitive resistor 13 become off-balance. The feedback control is performed to flow larger heating current Ih, thereby maintaining the balance of the bridge circuit. As a result, the value of the heating current Ih changes according to the amount of air flow. Namely, as the flow increases, the value of the heating current Ih becomes larger.

Because the heating current Ih also pass through the fixed resistor R10, a voltage drop due to the heating current Ih appears on the fixed resistor Rh. A voltage indicative of the flow or a sensor signal Vt can be obtained by picking up the voltage drop. Therefore, it functions as a sensor for measuring the air flow.

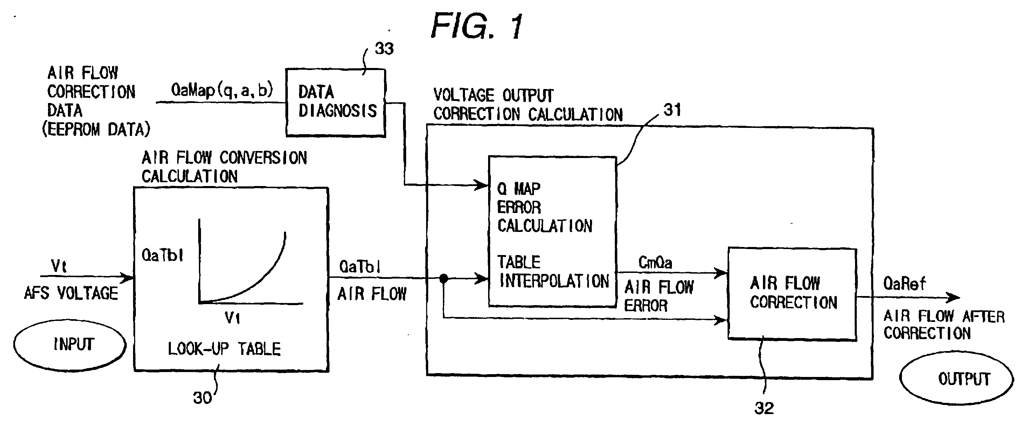

Because such a heating resistor type air flow measurement apparatus has an inherent measurement error, for example, by the variation of the resistance value of each of the resistors forming the drive circuit 1 shown in Fig. 1, or by the offset of the operational amplifier OP1, it is necessary to adjust or calibrate the apparatus so that the zero point and the spun (sensitivity) may fall within the predetermined range of specifications.

In the prior art, the characteristics of flow-detection of each of the heating resistor type air flow measurement apparatus is checked and adjusted to fall within the range of specifications before product-shipment.

Today, a resistance trimming method of adjusting a value of the resistance of a resistor is used widely as such an adjusting method. By using the method, the zero point and the spun is adjusted so that the measurement output may fall within the range of specifications.

While, another prior art, an alternative to the resistance trimming method is described in the U.S.P. 4, 669, 052. It is described as "an electronic trimming" or a multi-points correction method which uses digital data.

In the prior art or the multi-points correction method, the correction is made by using the digital data, instead of the resistance value of a resistor. Concretely, a map in which the predetermined data is stored is retrieved, an air flow is corrected by obtaining an air flow value and an flow error, and thus a signal indicative of the correct flow is output. The conventional heating resistor type air flow measurement apparatus to which the multi-points correction method is applied will be explained.

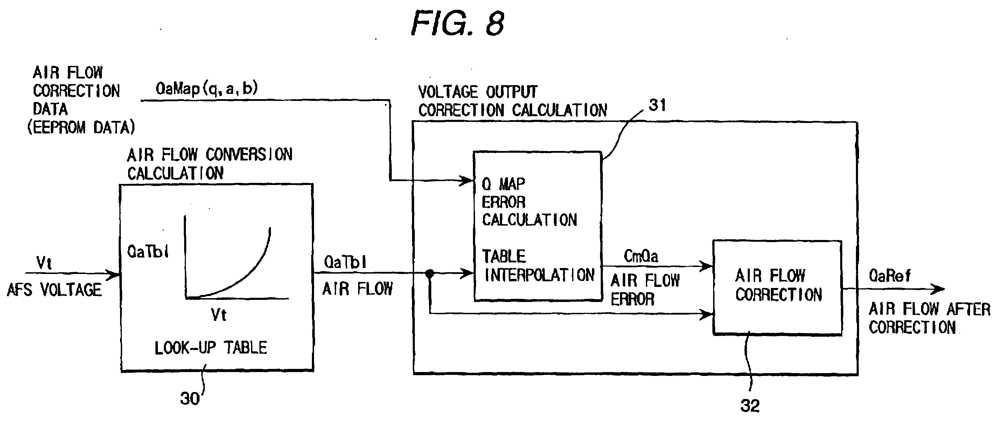

The prior art shown in Fig.8 comprises an air flow conversion calculation (block 30), a voltage output correction calculation (block 31), and a flow correction (block 32). In block 32, the flow conversion table (ROM table) pre-stored in a ROM is retrieved by using a sensor signal (voltage value) Vt input from the drive circuit 1 of the air flow measurement part (AFS) shown in Fig. 7, to convert into the air flow QaTbl,

The air flow conversion calculation in block 30 is the calculation for converting the voltage or the sensor signal Vt into the air flow, and the calculation corresponds to the pre-treatment of the trimming processing.

Therefore, the air flow conversion table use herein is set every model, and thus the same model has the same table. In other words, it is not for trimming processing.

Next, in block 31, the flow error CmQa is calculated from the air flow QaTbl input by using the flow correction data QaMap (q,a,b) pre-stored in a memory as the Q map (flow map). In this calculation, for example, a table interpolation method may be used.

In block 32, the air flow value QaTbl is corrected by using the flow error CmQa, thereby calculating the after-correction flow value QaRef.

The characteristics of the flow correction data QaMap (q,a,b) used is checked every apparatus after product-completion, in which the data required to correct the error is calculated and maintained. The correction processing by the flow correction data QaMap (q,a,b) corresponds to the adjustment processing in the resistance trimming. The trimmed and calibrated flow value is obtained as an after-correction flow value QaRef.

In the prior art, the flow correction data QaMap (q,a,b) for trimming is stored in the primary memory means, for example, before product-shipment. The flow correction data QaMap (q,a,b) is read from the primary memory means when the operation of the apparatus is started up, for example, when turning the power switch on. The flow correction data QaMaP(q,a,b) read is stored in the predetermined memory set on a program area or the secondary memory means to be used as a Q map.

As the primary memory means, for example, EEPROM (Electrically Erasable / Programmable Read only Memory) is used, which is a kind of nonvolatile memory possible to read/write data at any time.

In the above-mentioned prior art, the reliability of the flow correction data stored in the secondary memory means is not taken into consideration. There is, therefore, a problem that an abnormal measurement value of flow is output as it is even when the flow correction data becomes abnormal.

### Embodiment 1

Now, a heating resistor type air flow measurement apparatus of the present invention will be explained in detail with reference to the attached drawings.

Fig.1 shows a control block of one embodiment of the present invention, in which a block 33 is for data diagnosis, and other blocks are the same as the prior art described in Fig. 8.

A data diagnosis block 33 is controlled, for example, by a program control means (not shown). A power source of the air flow measurement apparatus is turned on by the program control means, and the data diagnosis block 33 is started up when the operation of the air flow measurement apparatus came up. At this time, a flow correction data QaMaP(q,a,b) is checked, Namely, the presence or absence of abnormality of the flow correction data is diagnosed.

In operation, the calculation for converting a sensor voltage signal Vt into the air flow is carried out in a block 30. The calculation corresponds to the pretreatment of the trimming. Therefore, with regard to the detailed description of the calculation, see the description of the prior art. Only flow conversion table used in the conversion process will be explained hereinafter.

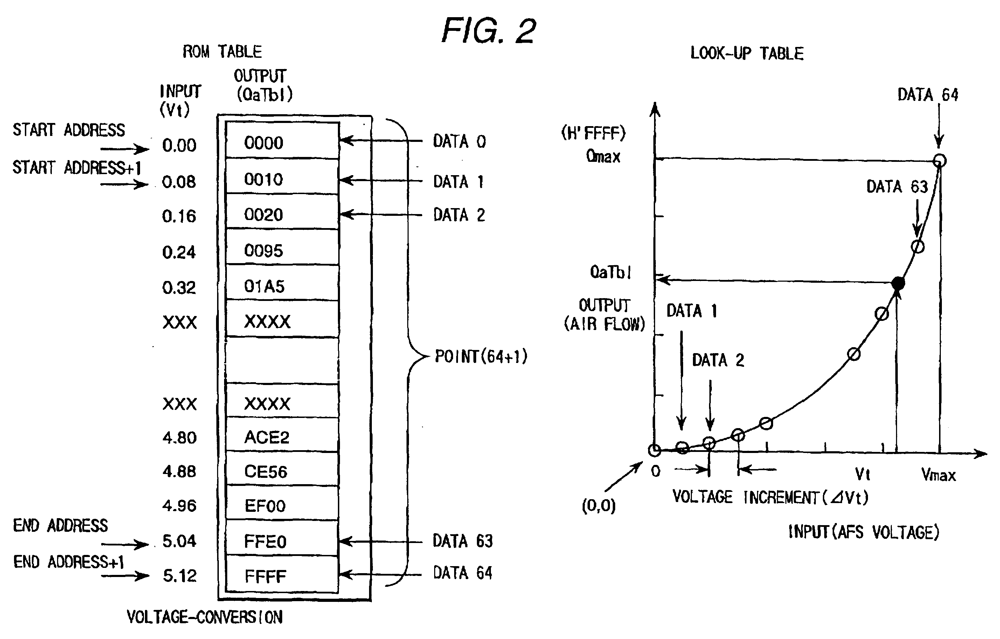

Fig. 2 shows an example of the flow conversion table. The flow conversion table is made up by 64 kinds of data and stored in a ROM (Read-Only Memory). Of course, the number of the data is not limited to 64.

As shown in Fig. 2, data look-up is performed based on the sensor signal Vt. The 64 kinds of data from "0000" to "FFFF" are retrieved, and thus the air flow QaTbl is calculated by using the linear interpolation.

In a block 31 in which the same calculation as the prior art of Fig.7 is carried out, a flow error CmQa for trimming is calculated from the input air flow QaTbl by using the flow correction data QaMaP(q,a,b) as a Q map (flow map). At this time, the table interpolation is also used like the prior art. With regard to the detailed description of the table interpolation, see the description of BACKGROUND OF THE INVENTION. The flow correction data QaMaP(q,a,b) read from the EEPROM will be explained hereinafter.

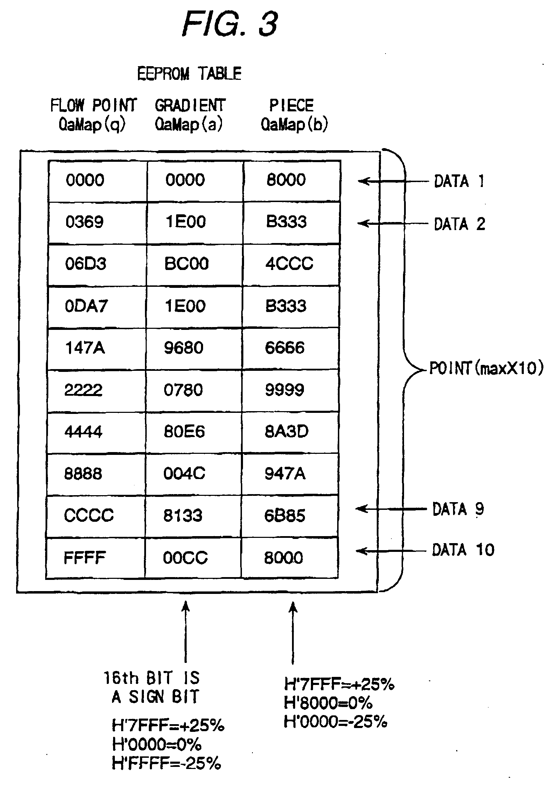

The flow correction data QaMaP(q,a,b) has a table scheme shown in Fig. 3, and comprises the items of a flow point (g), a gradient (a) at that point, and a piece (b).

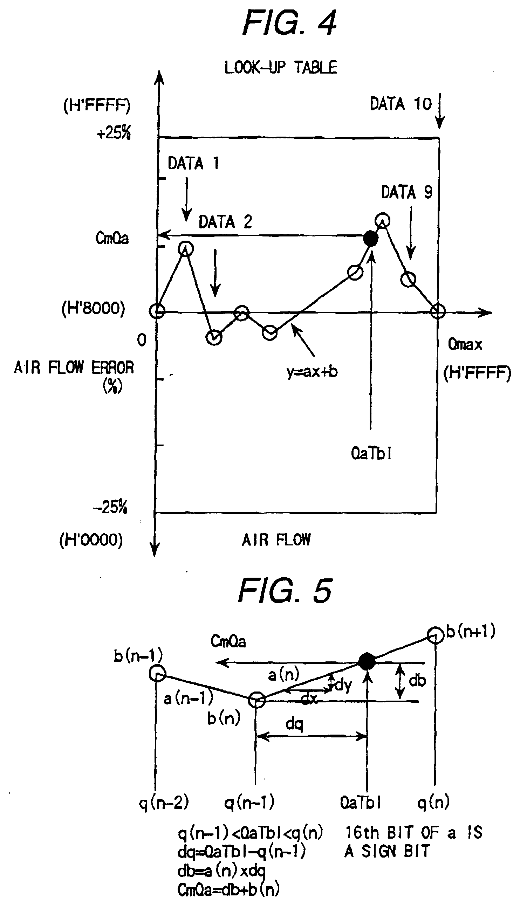

The flow error CmQa is calculated directly from the input air flow QaTbl or by the linear interpolation, as shown in Figs. 4 and 5, by retrieving the data table.

In a block 32, the air flow QaTbl is corrected by using the flow error CmQa, the corrected flow value QaRef is calculated. This processing is also the same as the prior art of Fig. 7.

Next, the processing of a block 33 for data diagnosis will be explained.

In the data diagnosis of the block 33, the present or absence of the abnormality is diagnosed by checking the flow correction data QaMaP(q,a,b) which is read from a primary storing means and then set as the Q map in a secondary storing means, when the power source of the air flow measurement apparatus is turned on and its operation is started up.

In a first embodiment of the present invention, the following method is used as the data diagnosis method in the block 33.

Namely, when the data is written in the first storing means or EEPROM, for example, before the shipment of products, the data is added every 1 byte. At the completion of the write, 1 byte of the lowest order of the result of addition is written in the EEPROM together with the data written at that time.

Under such a condition, also when the data is read, the data is added every 1 byte in the same way as the write. Finally, the result of addition is compared with the addition value obtained when the data is written. If both is equal to each other, then the determination that the data just now read is correct is performed.

A method according to a first embodiment will be explained in more concrete with reference to the table data shown in Fig. 3.

In data 10 of the data table of Fig. 3, the data of a flow point is FFFF(HEX), the data of gradient 00CC(HEX) and the data of a piece 8000 (HEX).

Since the data is written every 1 byte, the form of transmission of the data is also every 1 byte as follows.
FF + FF+ 00 + CC + 80 + 00

The value obtained by adding the 6 bytes of data every 1 byte becomes equal to the above calculation result.
34A

Therefore, 1 byte of the lowest order is
4A

This is the addition value data written in the EEPROM after and together with the 6 bytes of table data. flow correction data QaMaP(q,a,b)

Next, when the data is read, the addition is performed while reading the 6 bytes of data every 1 byte. The result of addition is compared with the addition value data obtained when the data read at 7th byte is written. If both coincides with each other, then it is determined that the data is correctly read and correctly written in the secondary memory means, and thus the flow correction data QaMap (q,a,b) is correct.

Therefore, at this time, the control of the engine continues at it is.

While, if the results of addition dose not coincide with each other, then it is determined that the flow correction data QaMap (q,a,b) is abnormal. Then the processing done in an abnormal state is performed. Therefore, a back-up system is completed.

The processing done in an abnormal state is that: after the power is turned off once, turning again the power on is urged, or that the flow correction data QaMap (q,a,b) for back-up use set in the program area for such an abnormal state is used, and the correction of the sensor signal is kept continued. It will be appreciated that any back-up processing may be performed based on the require from the engine control system which uses the sensor signal.

According to the first embodiment of the present invention, if the flow correction data QaMap (q,a,b) used in the calibration of the sensor signal is abnormal, then the processing done in an abnormal state is essentially performed. It is, therefore, possible to prevent with high reliability the fear that the performance of vehicle running is deteriorated or that an exhaust gas processing unit becomes abnormal due to the deterioration of the exhaust gas.

### Embodiment 2

A flow correction data diagnosing method according to a second embodiment of the present invention will be explained next.

The flow correction data diagnosing method according to a second embodiment is a method in which the continuity of the data is confirmed, instead of the addition value of the data.

In the flow correction data, the gradient and the piece are defined every flow point as shown in Fig. 3. Further, approximations are made to the flow correction data every section of the flow defined.

It is, therefore, required that the neighborhoods of the table data are a series of the same data. Accordingly, the table data to be pre-stored in the EEPROM is defined to maintain the continuity and stored in it.

After reading the data, it is checked whether or not the first-order equation defined in each table is connected at the same connection point every predetermined flow section. If so, then it is determined for the data to be correct. Otherwise, then it is determined that the correction data is abnormal, and the processing done in an abnormal state is performed in the same way as the first embodiment.

Also according to the second embodiment of the present invention, if the flow correction data QaMap (q,a,b) used in the calibration of the sensor signal is abnormal, then the processing done in an abnormal state is essentially performed. It is, therefore, possible to prevent with high reliability the fear that the performance of vehicle running is deteriorated or that an exhaust gas processing unit becomes abnormal due to the deterioration of the exhaust gas.

While two kinds of data diagnosing methods have been described above as the first and second embodiments, it is needless to say that these diagnosing methods can be used at the same time.

Further, in the above embodiments the calculating method based on the gradient and the piece has been used as a method for interpolating linearly the flow correction data. However, it should be noted that another method can be used, in which two coordinate point are provided in lieu of the setting the gradient and the piece to the table, and a first-order linear interpolation is made based on the two data.

Further, in order to correct with high accuracy even if the number of table data is decreased, it is possible to use another interpolating method in which three coordinate values are provided in the flow section to be set in the table, and the interpolation is made by a second-order curve based on the coordinate values. Also by using this method, the correction data can be accurately diagnosed.

Further, even in the case that the present invention is performed by using a method of interpolating linearly from the first-order or the second-order equation based on the coordinate values, it is possible to use either a method of comparing the addition values of the correction data stored or a method of determining whether or not the connection points of the data coincide with each other, as a method of diagnosing the data from the gradient and the piece.

Further, while in the above embodiments the EEPROM is used as the nonvolatile memory or the first memory means, it is possible to use any nonvolatile memories such as a flash memory and a ferroelectric memory. The same function as the above embodiment can be obtained in such a case.

In the above embodiments, considering the data will be changed later, a memory possible to rewrite the data has been used as the first memory means in which the flow correction data for calibration is stored. However, if the data is not changed after adjustment data had been determined once, then it is possible to use a PROM (Programmable ROM).

According to the present invention, the reliability of the correction data can be sufficiently assured in the heating resistor type air flow measurement apparatus in which the electronically trimming is used, and the advantages of the electronically trimming method can be sufficiently provided. As compared with the resistor trimming method, it is possible remarkably to decrease the adjusting task, and provide an improved heating resistor type air flow measurement apparatus which can assure the high reliability at low cost.

While the described embodiment represents the preferred form of the present invention, it is to be understood that changes and variations may be made without departing from the spirit of the invention.

## Claims

1. A heating resistor type air flow measurement apparatus in which a flow correction data is read out from a predetermined primary memory means and stored in a secondary memory means, and then an air flow signal is calibrated by the flow correction data stored in the secondary memory means, when starting the apparatus up, comprising:
a diagnosis means for determining whether or not the flow correction data stored in the primary memory means is correct,
wherein said determination processing of the flow correction data by the diagnosis means is performed at during any time at least including the starting-up point of the apparatus.

2. A heating resistor type air flow measurement apparatus according to claim 1, wherein said determination processing in the diagnosis means is a comparison processing for comparing the value obtained by adding each of the data calculated and stored when the flow correction data is stored in the primary memory means with the value obtained by adding each of the data when the flow correction data is read from the primary memory means.

3. A heating resistor type air flow measurement apparatus according to claim 1, wherein said determination processing in the diagnosis means is the processing for comparing the boundary values of the data with each other, obtained by interpolating linearly each of the data stored in the primary memory means.

4. A heating resistor type air flow measurement apparatus according to claim 3, wherein said linear interpolation is defined by a primary equation of gradient and piece.

5. A heating resistor type air flow measurement apparatus according to claim 3, wherein said linear interpolation is defined by a primary equation of two coordinate values.

6. A heating resistor type air flow measurement apparatus according to claim 3, wherein said linear interpolation is defined by a primary equation of three coordinate values.

7. A heating resistor type air flow measurement apparatus according to claim 1, wherein said primary memory means is any one of a read only memory possible to write electrically data, a ferroelectric memory possible to write electrically data, or a flash memory possible to write electrically data.
